# EUROPEAN PATENT APPLICATION

(11) **EP 4 787 455 A1**
(43) Date of publication of application: **05.08.2026**
(21) Application number: 26150790.9
(22) Date of filing: 08.01.2026
(51) Int. Cl.: H01M 4/133, H01M 4/131, H01M 4/136, H01M 4/587, H01M 4/1393, H01M 4/36, H01M 4/525, H01M 4/58, H01M 10/0525

(54) **ELECTRICITY STORAGE DEVICE AND METHOD FOR MANUFACTURING THE SAME**

(30) Priority: 23.01.2025 JP 2025010066
(71) Applicant: Prime Planet Energy & Solutions, Inc., Chuo-ku, Tokyo 103-0022 (JP)
(72) Inventor: TAKESHITA, Shuhei, Tokyo 103-0022 (JP)
(74) Representative: Kuhnen & Wacker Patent- und Rechtsanwaltsbüro PartG mbB

(57) **Abstract**

An electricity storage device disclosed herein includes an electrode assembly including a positive electrode and a negative electrode. The negative electrode includes a negative electrode composite material layer containing a graphite-based negative electrode active material particle. A mean circularity of the graphite-based negative electrode active material particle is equal to or more than 0.8. With respect to a particle size distribution on a volume basis of the graphite-based negative electrode active material particle that is obtained by a laser diffraction scattering method, all of following conditions are satisfied when a particle diameter whose cumulative frequency from a small particle side is 10% is treated as d10, a particle diameter whose cumulative frequency is 50% is treated as d50, and a particle diameter whose cumulative frequency is 90% is treated as d90: (1) d90/d10 is equal to or more than 5; and (2) d90/d50 is equal to or less than 2.

## Description

### BACKGROUND OF THE DISCLOSURE

A present disclosure relates to an electricity storage device and a method for manufacturing the same.

JP2011238622A, WO2012/001845, JPH10-302774A, and JP2024-109342A disclose about a negative electrode that is used for a nonaqueous electrolytic solution secondary battery.

### SUMMARY

In an electrode assembly, an electrical charge carrier moves from a positive electrode to a negative electrode (particularly, which is a negative electrode active material) at an electrically charging time. For example, in a lithium ion secondary battery, a lithium ion moves from the positive electrode to the negative electrode at the electrically charging time. However, various materials are mixed in the positive electrode, and thus an amount of the lithium ion moving from the positive electrode to the negative electrode varies depending on a position. Thus, regarding the negative electrode active material that is arranged at a portion where many lithium ions move, there is a situation that the lithium ions may not be accepted and thus the lithium may deposit. If the lithium deposits, a resistance is increased and then a heat generation becomes easily caused at a short circuit time. The present inventor considers providing a technique to suppress the heat generation caused at the short circuit.

One aspect of the herein disclosed technique is an electricity storage device that includes an electrode assembly including a positive electrode and a negative electrode. The negative electrode includes a negative electrode composite material layer that contains the graphite-based negative electrode active material particle. A mean circularity of the graphite-based negative electrode active material particle is equal to or more than 0.8. With respect to a particle size distribution on a volume basis of the graphite-based negative electrode active material particle that is obtained by a laser diffraction scattering method, all of following conditions are satisfied when a particle diameter whose cumulative frequency from a small particle side is 10% is treated as d10, a particle diameter whose cumulative frequency is 50% is treated as d50, and a particle diameter whose cumulative frequency is 90% is treated as d90: (1) d90/d10 is equal to or more than 5; and (2) d90/d50 is equal to or less than 2.

In the above-described electricity storage device, it is possible to suppress the heat generation caused at the short circuit time.

### BRIEF DESCRIPTION OF THE DRAWINGS

FIG. 1 is a view that schematically shows an inside structure of an electricity storage device 100.
FIG. 2 is a schematic exploded view that shows a configuration of an electrode assembly 20.
FIG. 3 is a schematic view that shows an opposed portion of a positive electrode composite material layer 54 and a negative electrode composite material layer 64 of the electrode assembly 20.
FIG. 4 is a schematic view that shows an electrode assembly 200 in which a negative electrode 600 including a conventional negative electrode active material particle 660 is arranged to be opposed to a positive electrode 50 and that corresponds to FIG. 3.
FIG. 5 is a schematic view that shows a lattice plane of a crystal of a graphite-based negative electrode active material particle 66.
FIG. 6 is a schematic view that shows a lattice plane of a crystal of a negative electrode active material particle 660 whose orientation is higher than the graphite-based negative electrode active material particle 66.

### DETAILED DESCRIPTION

Below, some embodiments of a technique disclosed herein would be described in detail, by reference to accompanying drawings. The matters other than matters particularly mentioned in this description, and required for practicing the present disclosure (for example, a general configuration of the electricity storage device, manufacture process, or the like, which does not characterize the present disclosure) can be grasped as design matters of those skilled in the art based on the related art in the present field. The present disclosure can be implemented on a basis of contents disclosed in the present description and a common general technical knowledge.

In the drawings described below, the same numerals and signs are given to the members/parts providing the same effect. Additionally, the dimensional relation (such as length, width, and thickness) in each drawing does not always reflect the actual dimensional relation.

In the present description, a term "electricity storage device" represents a device in which an electrical charge and an electrical discharge are generated in response to movement of an electrical charge carrier between a pair of electrodes (a positive electrode and a negative electrode) through an electrolyte. The electricity storage device semantically covers a secondary battery, such as lithium ion secondary battery; and a capacitor, such as lithium ion capacitor and electric double layer capacitor.

In the present description, the wording "lithium ion secondary battery" represents a secondary battery which uses a lithium ion as an electrical charge carrier, and in which an electrical charge and discharge is implemented by movement of an electrical charge according to the lithium ion between a positive electrode and a negative electrode.

### <Electricity storage device>

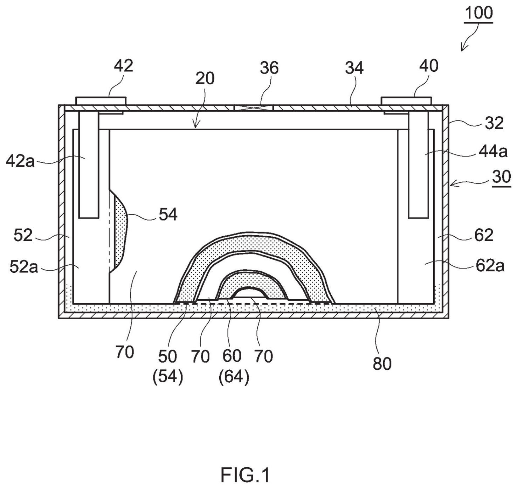

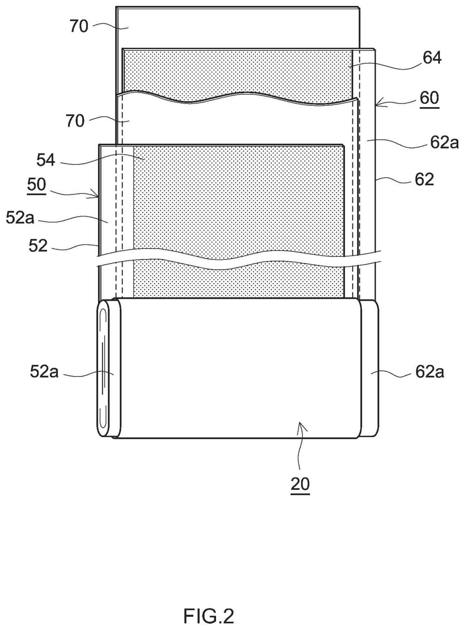

Below, as one embodiment, an electricity storage device 100 being a lithium ion secondary battery will be described. FIG. 1 is a view that schematically shows an inside structure of the electricity storage device 100. FIG. 2 is a schematic exploded view that shows a configuration of an electrode assembly 20. The electricity storage device 100 includes the electrode assembly 20, a positive electrode terminal 42, a negative electrode terminal 44, and a nonaqueous electrolytic solution 80.

The electricity storage device 100 shown by FIG. 1 is a sealed type battery that is constructed by accommodating the flat-shaped electrode assembly 20 and the nonaqueous electrolytic solution 80 in a flat-square-shaped case (in other words, an outer container) 30. The case 30 includes a case main body 32 having an opening and includes a sealing body 34 being configured to seal the opening. The sealing body 34 is provided with a positive electrode terminal 42 and a negative electrode terminal 44 that are for an outside connection, and provided with a thin-walled safe valve 36 that is set to release an internal pressure of the case 30 when the internal pressure is increased to a level being equal to or more than a predetermined level. **In** addition, the case 30 is provided with an injection port (not shown in drawings) that is configured for injecting the nonaqueous electrolytic solution 80. The positive electrode terminal 42 is electrically connected to a positive electrode current collection plate 42a. The negative electrode terminal 44 is electrically connected to a negative electrode current collection plate 44a. An example of a material of the case 30 includes a metal material that is lightweight and has a good thermal conductivity, such as aluminum. Incidentally, FIG. 1 is not intended to accurately show an amount of the nonaqueous electrolytic solution 80.

The electrode assembly 20 is a so-called wound electrode assembly. The electrode assembly 20 has a form, as shown in FIG. 1 and FIG. 2, in which a sheet-shaped positive electrode 50 and a sheet-shaped negative electrode 60 are stacked one on another via two long sheet-shaped separators 70 and then wound in a longitudinal direction. The positive electrode 50 has a configuration in which a positive electrode composite material layer 54 is formed along a longitudinal direction on one surface or both surfaces (here, on both surfaces) of a long positive electrode current collector 52. The negative electrode 60 has a configuration in which a negative electrode composite material layer 64 is formed along the longitudinal direction on one surface or both surfaces (here, on both surfaces) of a long negative electrode current collector 62. A positive electrode composite material layer non-formation portion 52a (in other words, a portion on which the positive electrode composite material layer 54 is not formed and thus the positive electrode current collector 52 is exposed) and a negative electrode composite material layer non-formation portion 62a (in other words, a portion on which the negative electrode composite material layer 64 is not formed and thus the negative electrode current collector 62 is exposed) are formed to protrude outwardly from the both ends of the electrode assembly 20 in a winding axis direction (in other words, a sheet width direction being orthogonal to the above described longitudinal direction). The positive electrode composite material layer non-formation portion 52a and the negative electrode composite material layer non-formation portion 62a are respectively joined to the positive electrode current collection plate 42a and the negative electrode current collection plate 44a.

As for the positive electrode current collector 52 configuring the positive electrode 50, it is possible to use a well known positive electrode current collector that is used for the lithium ion secondary battery. As an example of it, it is possible to use a sheet or a foil that is made of a metal having a better electrically conductive property (for example, aluminum, nickel, titanium, stainless steel, or the like). As for the positive electrode current collector 52, it is preferable to use an aluminum foil.

A size of the positive electrode current collector 52 is not particularly restricted, and may be suitably decided according to a battery design. In a situation where the aluminum foil is used as the positive electrode current collector 52, a thickness of it is, for example, equal to or more than 5 µm and not more than 35 µm, or preferably equal to or more than 7 µm and not more than 20 µm although the thickness is not particularly restricted.

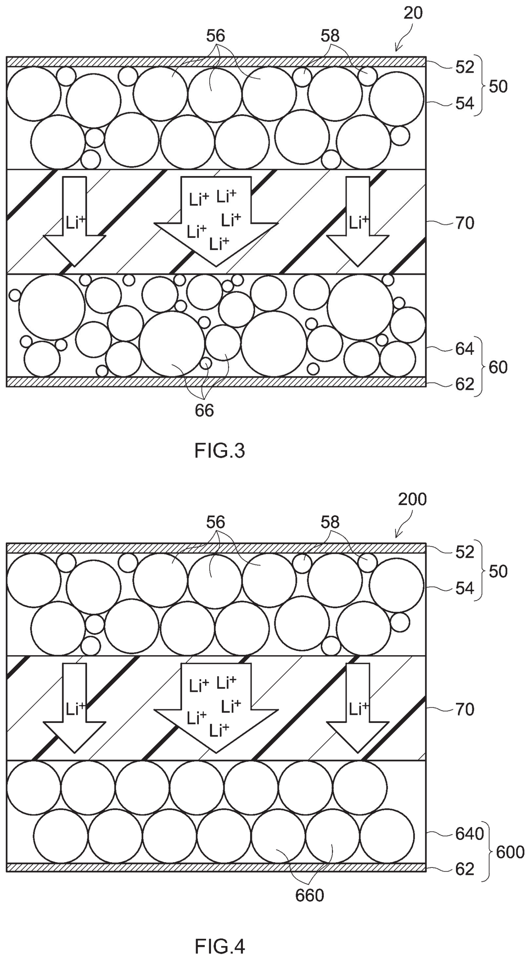

FIG. 3 is a schematic view that shows an opposed portion of the positive electrode composite material layer 54 and the negative electrode composite material layer 64 of the electrode assembly 20. Although details are described later, in FIG. 3, a movement amount of the lithium ion at the electrically charging time is schematically shown by an arrow.

As shown in FIG. 3, the positive electrode composite material layer 54 contains a first positive electrode active material particle 56 and a second positive electrode active material particle 58, as a positive electrode active material. The first positive electrode active material particle 56 is configured with a composition different from the second positive electrode active material particle 58. A crystal structure of the first positive electrode active material particle 56 is different from a crystal structure of the second positive electrode active material particle 58 in this embodiment. The crystal structure of the first positive electrode active material particle 56 or the crystal structure of the second positive electrode active material particle 58 may be, for example, a layered rock salt structure, a spinel structure, an olivine structure, or the like. In the present embodiment, the first positive electrode active material particle 56 has the layered rock salt structure, and the second positive electrode active material particle 58 has the olivine structure. Incidentally, the crystal structure of the positive electrode active material particle can be confirmed, for example, by an X-ray diffraction method.

A positive electrode active material particle having the layered rock salt structure may be a conventionally known one such as a lithium nickel oxide, a lithium cobalt oxide, a lithium nickel cobalt composite oxide, a lithium nickel manganese composite oxide, a lithium nickel cobalt manganese composite oxide, a lithium nickel cobalt aluminum composite oxide, or the like. Among them, it is preferable as the first positive electrode active material particle 56 to use the lithium nickel cobalt manganese composite oxide.

It is preferable that the lithium nickel cobalt manganese composite oxide has, for example, a composition represented by Formula (I) described below.

Li_{α}NiₓCo_{y}Mn_{z}MₜO₂ (I)

In the above described Formula (I), α, x, y, z, and t respectively satisfy 1 ≦ α ≦ 1.3, 0.25 < x < 0.9, 0< y < 0.6, 0< z < 0.6, 0 ≦ t ≦ 0.1, and x + y + z + t = 1. In a situation where 0< t is satisfied, M is at least one kind of element that is selected from a group consisting of Mg, Ca, Al, Ti, V, Cr, Fe, Cu, Zn, Zr, Nb, Mo, Ta, and W.

In the above described Formula (1), 1 ≦ α ≦ 1.2 may be satisfied, or 1 ≦ α ≦ 1.1 may be satisfied. From a perspective of achieving both a higher capacity and a safety property, 0.5 ≦x ≦ 0.8 may be satisfied, or 0.6 ≦ x ≦ 0.7 may be satisfied. In addition, 0.01 ≦y ≦ 0.5 may be satisfied, or 0.05 ≦ y ≦ 0.35 may be satisfied. In addition, 0.01 ≦ z ≦ 0.5 may be satisfied, or 0.05 ≦ z ≦ 0.35 may be satisfied. In addition, 0 ≦ t ≦ 0.05 may be satisfied, or t = 0 (in other words, M is not contained) may be satisfied.

The positive electrode active material particle having the olivine structure may includes a conventionally known one such as a lithium transition metal phosphate compound. The lithium transition metal phosphate compound may include, for example, lithium iron phosphate (LiFePO₄, LFP), lithium manganese phosphate (LiMnPO₄), lithium manganese iron phosphate, and/or the like. In the present embodiment, the lithium iron phosphate is used as the second positive electrode active material particle 58.

The positive electrode active material particle having the spinel structure may include a conventionally known one such as a lithium manganese composite oxide, or the like.

The first positive electrode active material particle 56 may be a single crystal particle or a polycrystal particle. Preferably, the first positive electrode active material particle 56 is the single crystal particle. The single crystal particle may be, for example, a single particle consisting of one particle that is present alone without being aggregated with another particle, or may be a secondary particle in which, for example, primary particles, equal to or more than 2 and less than 10, are aggregated. In the present description, the wording "single crystal particle" means a particle in which a grain boundary of the single particle or the primary particle cannot be observed on an appearance of a SEM image. Additionally, in the present description, the wording "primary particle" means a minimum unit of the primary particles configuring the secondary particle, and in particular, means a minimum unit which is decided on the basis of a geometric form on the appearance.

The first positive electrode active material particle 56 may be an aggregated particle (the secondary particle) in which more primary particles are aggregated than the single crystal particle. In the present description, the wording "aggregated particle" means one in which a number of the primary particles configuring the aggregated particle is equal to or more than 10. In a situation where the first positive electrode active material particle 56 is the aggregated particle, the number of the primary particles configuring the first positive electrode active material particle 56 may be, for example, equal to or more than 30, equal to or more than 50, or equal to or more than 100.

A mean particle diameter of the first positive electrode active material particle 56 may be, for example, equal to or more than 2 µm, or equal to or more than 3 µm. In addition, the mean particle diameter of the first positive electrode active material particle 56 may be, for example, equal to or less than 25 µm, or equal to or less than 20 µm. In a situation where the first positive electrode active material particle 56 is the single crystal particle, the mean particle diameter may be, for example, equal to or more than 2 µm and not more than 6 µm, or may be equal to or more than 3 µm and not more than 5 µm. In a situation where the first positive electrode active material particle 56 is the aggregated particle, the mean particle diameter may be, for example, equal to or more than 12 µm and not more than 25 µm, or equal to or more than 15 µm and not more than 20 µm. Incidentally, in the present description, the wording "mean particle diameter" of the positive electrode active material particle means a particle diameter (a median diameter) whose cumulative frequency from a small particle side is 50% with respect to a particle size distribution on a volume basis according to a laser diffraction scattering method.

A shape of the first positive electrode active material particle 56 is not particularly restricted, but may be, for example, spherical, columnar, massive, or the like.

The second positive electrode active material particle 58 may be the single crystal particle, or the polycrystal particle. In addition, the second positive electrode active material particle 58 may be the single particle, or may be the aggregated particle.

A mean particle diameter of the second positive electrode active material particle 58 may be, for example, equal to or more than 0.1 µm, equal to or more than 0.3 µm, or equal to or more than 0.5 µm. The mean particle diameter of the second positive electrode active material particle 58 may be, for example, equal to or less than 10 µm, equal to or less than 5 µm, equal to or less than 3 µm, equal to or less than 2 µm, or equal to or less than 1 µm. From a perspective of suppressing the heat generation at the short circuit time, the mean particle diameter of the second positive electrode active material particle 58 is preferably equal to or more than 0.1 µm and not more than 5 µm, further preferably equal to or more than 0.5 µm and not more than 2 µm, or furthermore preferably equal to or more than 1 µm and not more than 2 µm.

A shape of the second positive electrode active material particle 58 is not particularly restricted, but may be, for example, spherical, columnar, massive, or the like.

A mass ratio of the first positive electrode active material particle 56 and the second positive electrode active material particle 58 may be, for example, within a range of being 99.5 : 0.5 to 95 : 5, or is preferably within a range of being 99 : 1 to 97 : 3. In the present embodiment, as the second positive electrode active material particle 58, the lithium iron phosphate (LFP) is used. The positive electrode active material particle containing the LFP having the olivine structure exhibits an insulation effect under an electrical discharge state (for example, the SOC of the electricity storage device is equal to or less than 20%). Thus, with the mass ratio described above, it is possible to make the second positive electrode active material particle 58 exhibit the insulation effect at the short circuit time, and to suppress the heat generation at the short circuit time.

The positive electrode composite material layer 54 may contain a component other than the positive electrode active material, for example, an electrically conducting material, a binder, or the like. The electrically conducting material may include a carbon material, such as carbon black (for example, acetylene black (AB)), carbon nanotube, and/or graphite. The binder may include polyvinylidene fluoride (PVdF), or the like.

A thickness of the positive electrode composite material layer 54 is not particularly restricted, but from a perspective of the higher energy density, for example, it is equal to or more than 10 µm and not more than 400 µm, preferably equal to or more than 50 µm and not more than 300 µm, further preferably equal to or more than 100 µm and not more than 300 µm.

The positive electrode 50 may include an insulation layer (not shown in drawings) at a boundary part of the positive electrode composite material layer non-formation portion 52a and the positive electrode composite material layer 54. This insulation layer contains, for example, a ceramic particle, or the like.

As described above, the positive electrode composite material layer 54 contains various components, such as positive electrode active material, electrically conducting material, and binder. Each component has a property, such as electron conductivity, which is different from another component, and thus a resistance of the positive electrode composite material layer 54 could be non-uniform condition depending on a distribution or an arrangement of each component on the positive electrode composite material layer 54. As the result, an amount of the electrical charge carrier (here, the lithium ion) moving from the positive electrode composite material layer 54 to the negative electrode 60 happens to be varied. As shown in FIG. 3, the present embodiment contains the first positive electrode active material particle 56 as the positive electrode active material, and the second positive electrode active material particle 58 whose composition is different from the first positive electrode active material particle 56. There is a difference of the electron conductivity between the first positive electrode active material particle 56 and the second positive electrode active material particle 58, and thus the amount of the lithium ion moving to the negative electrode 60 is varied depending on a position of the positive electrode composite material layer 54. Here, the electron conductivity of the first positive electrode active material particle 56 is higher than the electron conductivity of the second positive electrode active material particle 58. Thus, on a portion where the arranged second positive electrode active material particles 58 are relatively few, the movement amount of the lithium ion becomes larger (see a portion near the center of FIG. 3). Accordingly, on the negative electrode composite material layer 64 being opposed to the positive electrode composite material layer 54, the amount of the received lithium ion becomes different depending on a position (which is the non-uniform condition).

FIG. 4 is a schematic view that shows an electrode assembly 200 in which a negative electrode 600 including a conventional negative electrode active material particle 660 is arranged to be opposed to the positive electrode 50 and that corresponds to FIG. 3. The negative electrode 600 shown by FIG. 4 includes a negative electrode composite material layer 640 that contains the negative electrode active material particle 660. The negative electrode active material particle 660 has a narrow particle size distribution. Thus, the average sized negative electrode active material particles 660 are aligned at a surface of the negative electrode composite material layer 640(at a side closer to the positive electrode composite material layer 54). Therefore, at the portion where the amount of the lithium ion moving from the positive electrode composite material layer 54 is large, the number of the negative electrode active material particles 660 receiving the lithium ion is few. As the result, a load being applied on the negative electrode active material particle 660, which is arranged on the portion where the movement amount of the lithium ion is large, becomes larger and thus the lithium deposition becomes easily caused. Accordingly, the resistance is increased, and thus the heat generation happens to be easily caused at the short circuit time. Therefore, the present inventor considers suppressing the heat generation at the short circuit time.

As the negative electrode current collector 62 configuring the negative electrode 60, it is possible to use a well-known negative electrode current collector that is used for the lithium ion secondary battery, and as an example, it is possible to use a sheet or a foil that is made of a metal having a good electrically conductive property (for example, a copper, a nickel, a titanium, a stainless steel, or the like). As the negative electrode current collector 62, the copper foil is preferable.

A size of the negative electrode current collector 62 is not particularly restricted, and may be suitably decided according to a battery design. In a situation where the copper foil is used as the negative electrode current collector 62, a thickness of it is, for example, equal to or more than 5 µm and not more than 35 µm, or preferably equal to or more than 6 µm and not more than 20 µm, although the thickness is not particularly restricted.

The negative electrode composite material layer 64 contains the negative electrode active material. In the present embodiment, the negative electrode active material contains the graphite-based negative electrode active material particle 66. A carbon material configuring the graphite-based negative electrode active material particle 66 may include a graphite, a hard carbon, a soft carbon, and/or the like. The graphite is preferable among them. The graphite may be a natural graphite, an artificial graphite, or an amorphous carbon coated graphite in a form where the graphite is covered by an amorphous carbon material.

The negative-electrode composite layer 64 may contain at least 75 mass % of the negative-electrode active material as graphite-based active material particles 66, preferably at least 90 mass %, and more preferably 100 mass % as the graphite-based active material particles 66.

A mean circularity of the graphite-based negative electrode active material particle 66 is equal to or more than 0.8, preferably equal to or more than 0.85, or further preferably equal to or more than 0.90. As the mean circularity of the graphite-based negative electrode active material particle 66 is higher, the lithium ion can further easily reach the negative electrode current collector 62 side of the negative electrode composite material layer 64, and thus it is possible to suppress the lithium deposition on a surface of the negative electrode composite material layer 64. As the result, it is possible to suppress the heat generation caused at the short circuit time. An upper limit of the mean circularity of the graphite-based negative electrode active material particle 66 is not particularly restricted, and thus it may be 1.0 that is a theoretical maximum value.

**In** the present description, the circularity means a ratio of a perimeter of a perfect circle having an area being the same as a projection area of a particle with respect to a perimeter of a particle projected image (in other words, "circularity" = "perimeter of perfect circle having area the same as projection area of particle" / "perimeter of particle projected image"). Thus, as the circularity is closer to **1,** it means that the particle projected image is closer to the perfect circle and thus the particle becomes closer to a perfect sphere. The mean circularity can be obtained, for example, with a commercially available automated static image analysis device (for example, Morphologi series made by Malvern Panalytical) by obtaining the circularities of 1000 or more particles, and then calculating the mean value of them.

The mean circularity of the graphite-based negative electrode active material particle 66 used in the present embodiment is higher than a mean circularity of a general flake graphite. Thus, the graphite-based negative electrode active material particle 66 whose mean circularity is high as described above can be obtained, typically, by performing a spheroidization process on the flake graphite according to a well-known method. As one example, the graphite-based negative electrode active material particle 66 whose mean circularity is high as described above can be obtained by granulating the flake graphite in a spheroidized shape. In particular, for example, while the flake graphite is made to roll, an impact is applied to make particles be firmly and closely bonded to each other so as to perform a granulating process until they becomes spheroidized particles whose sizes are several µm to several tens of µm. For the granulating process as described above, it is possible to use a device, such as ball mill, bead mill, hybridization system made by Nara Machinery CO., LTD., Nobilta made by Hosokawa Micron Corporation, FM Mixer made by Nippon Coke & Engineering CO., LTD., and Composite made by Nippon Coke & Engineering CO., LTD.. At that time, by changing a processing condition (especially, a processing time, a processing number, or the like), it is possible to adjust the mean circularity.

It is more preferable that a crystal of the graphite-based negative electrode active material particle 66 is oriented in various directions, than that the crystal is oriented in a predetermined direction. In the present description, the wording "orientation degree of the graphite-based negative electrode active material particle 66" is a ratio I₍₀₀₄₎/I₍₁₁₀₎ of a peak strength I₍₀₀₄₎ of a (004) lattice plane with respect to a peak strength I₍₁₁₀₎ of a (110) lattice plane of an X-ray diffraction spectrum obtained by a wide angle X-ray diffraction method (XRD). An X-ray diffraction spectrum of the graphite-based negative electrode active material particle 66 is obtained on the basis of JIS K 131-1996 while a powder configured with the graphite-based negative electrode active material particle 66 is treated as a target. Near 20 = 78° of the X-ray diffraction spectrum, a peak based on the (110) lattice plane is confirmed. Near 20 = 55° of the X-ray diffraction spectrum, a peak based on the (004) lattice plane is confirmed. A peak strength is calculated from a peak area in which a background of the X-ray diffraction spectrum is excluded.

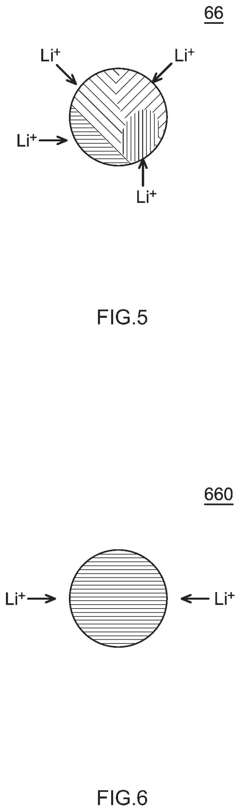

FIG. 5 is a schematic view that shows a lattice plane of a crystal of the graphite-based negative electrode active material particle 66. FIG. 6 is a schematic view that shows a lattice plane of a crystal of the negative electrode active material particle 660 whose orientation is higher than the graphite-based negative electrode active material particle 66. The negative electrode active material particle 660 has an orientation degree being higher than the graphite-based negative electrode active material particle 66, and thus the lattice plane of the crystal is oriented in a predetermined direction as shown in FIG. 6. Therefore, the lithium ion enters to an inside of the negative electrode active material particle 660 from a predetermined direction in which the lattice plane of the crystal is oriented. However, the lithium ion coming in a direction different from the predetermined direction almost cannot enter the inside of the negative electrode active material particle 660. As the result, near a surface other than the oriented direction of the lattice plane of the crystal of the negative electrode active material particle 660, the lithium deposition may be easily caused. On the other hand, regarding the graphite-based negative electrode active material particle 66, the orientation degree is lower and thus the lattice plane of the crystal is directed in various directions as shown in FIG. 5. Accordingly, the lithium ion can enter into the graphite-based negative electrode active material particle 66 from various directions. Therefore, regarding the graphite-based negative electrode active material particle 66, the lithium deposition is hardly caused. As the result, it is possible to suppress the resistance increase caused by the lithium deposition, and thus it is possible to suppress the heat generation caused at the short circuit time. Incidentally, a mechanism described above contains an estimation, and is not to restrict the present technique.

The orientation degree (I₍₀₀₄₎/I₍₁₁₀₎) of the graphite-based negative electrode active material particle 66 is, for example, equal to or less than 5.5, preferably equal to or less than 4.5, further preferably equal to or less than 4.2, or furthermore preferably equal to or less than 4. Accordingly, it is possible to suitably suppress the lithium deposition, and thus it is possible to further suitably suppress the heat generation caused at the short circuit. Although a lower limit of the orientation degree of the graphite-based negative electrode active material particle 66 is not particularly restricted, but may be, for example, equal to or more than 2.5, equal to or more than 3, equal to or more than 3.6, or equal to or more than 3.8.

The graphite-based negative electrode active material particle 66 satisfies all of the following conditions, while a particle diameter whose cumulative frequency from a small particle side is 10% is treated as d10, a particle diameter whose cumulative frequency is 50% is treated as d50, and a particle diameter whose cumulative frequency is 90% is treated as d90 with respect to the particle size distribution on a volume basis obtained by the laser diffraction scattering method:
(1) d90/d10 is equal to or more than 5; and
(2) d90/d50 is equal to or less than 2.

A value of the d90/d10 is used as an indicator representing an area size of the particle size distribution. In addition, a value of the d90/d50 is used as an indicator representing an extent (a width) of the particle size distribution of a particle whose particle diameter is larger than the mean particle diameter (d50) of the particle group. The graphite-based negative electrode active material particle 66 satisfies both of the conditions (1) and (2), and thus has the wide particle size distribution from the small particle to the large particle, and therefore there are many particles whose particle diameters are comparatively closer to the d50 regarding the particles which are larger than the mean particle diameter (d50). Accordingly, it is possible to increase a number of the graphite-based negative electrode active material particles 66 that are present on a surface of the negative electrode composite material layer 64 per unit area. Therefore, on a portion of the negative electrode composite material layer 64 where the movement amount of the lithium ion is large, it is possible to increase the number of the graphite-based negative electrode active material particles 66 receiving the lithium ions, and therefore it is possible to reduce a load applied on each of particles. As the result, it is possible to suppress the lithium deposition and to suppress the heat generation caused at the short circuit time.

The d90/d10 of the graphite-based negative electrode active material particle 66 is, for example, equal to or more than 5, but may be equal to or more than 5.2, or equal to or more than 5.4. As the d90/d10 becomes larger, it is further possible to increase the number of the graphite-based negative electrode active material particles 66 that are present on the surface of the negative electrode composite material layer 64 per unit area. In addition, an upper limit of the d90/d10 of the graphite-based negative electrode active material particle 66 is not particularly restricted, but is, for example, equal to or less than 10, or may be equal to or less than 8, equal to or less than 6, or equal to or less than 5.5.

The d90/d50 of the graphite-based negative electrode active material particle 66 is, for example, equal to or less than 2, or may be equal to or less than 1.95, or equal to or less than 1.93. Since there are more particles whose particle diameters are comparatively closer to the d50 regarding the particle which is larger than the mean particle diameter (d50) as the d90/d50 is smaller, it is possible to increase the number of the graphite-based negative electrode active material particles 66 that are present on the surface of the negative electrode composite material layer 64 per unit area. A lower limit of the d90/d50 of the graphite-based negative electrode active material particle 66 is not particularly restricted, but may be, for example, equal to or more than 1.3, equal to or more than 1.5, equal to or more than 1.7, or equal to or more than 1.8.

The d50/d10 of the graphite-based negative electrode active material particle 66 is used as an indicator representing an extent (a width) of the particle size distribution of a particle whose particle diameter is smaller than the mean particle diameter (d50) of the particle group. The d50/d10 of the graphite-based negative electrode active material particle 66 is, for example, equal to or more than 2, or may be equal to or more than 2.5, or equal to or more than 2.8. As the d50/d10 is larger, it is possible to increase a number of the graphite-based negative electrode active material particles 66 that are present on a surface of the negative electrode composite material layer 64 per unit area, and as a result, it is possible to suppress the heat generation caused at the short circuit. An upper limit of the d50/d10 of the graphite-based negative electrode active material particle 66 is not particularly restricted, but may be, for example, equal to or less than 4, equal to or less than 3.5, or equal to or less than 3.

The d10 of the graphite-based negative electrode active material particle 66 is, for example, equal to or more than 2 µm, or may be equal to or more than 3 µm, or equal to or more than 4 µm. The d10 of the graphite-based negative electrode active material particle 66 is, for example, equal to or less than 7 µm, or may be equal to or less than 6 µm, or equal to or less than 5 µm.

The d50 of the graphite-based negative electrode active material particle 66 is, for example, equal to or more than 10 µm, or may be equal to or more than 12 µm, or equal to or more than 13 µm. The d50 of the graphite-based negative electrode active material particle 66 is, for example, equal to or less than 20 µm, or may be equal to or less than 18 µm, equal to or less than 16 µm, or equal to or less than 15 µm.

The d90 of the graphite-based negative electrode active material particle 66 is, for example, equal to or more than 20 µm, or may be equal to or more than 22 µm, or equal to or more than 25 µm. The d90 of the graphite-based negative electrode active material particle 66 is, for example, equal to or less than 35 µm, or may be equal to or less than 33 µm, equal to or less than 30 µm, or equal to or less than 28 µm.

The negative electrode composite material layer 64 can obtain a component other than the active material, for example, contain a binder, a thickening agent, or the like. As the binder, it is possible to use, for example, styrene butadiene rubber (SBR), polyvinylidene fluoride (PVdF), or the like. As the thickening agent, it is possible to use, for example, carboxymethyl cellulose (CMC), or the like.

A content amount of the negative electrode active material in the negative electrode composite material layer 64 is preferably equal to or more than 90 mass%, or further preferably equal to or more than 95 mass% and not more than 99 mass%. A content amount of the binder in the negative electrode composite material layer 64 is preferably equal to or more than 0.1 mass% and not more than 8 mass%, or further preferably equal to or more than 0.5 mass% and not more than 3 mass%. A content amount of the thickening agent in the negative electrode composite material layer 64 is preferably equal to or more than 0.3 mass% and not more than 3 mass%, or further preferably equal to or more than 0.5 mass% and not more than 2 mass%.

A thickness of the negative electrode composite material layer 64 is not particularly restricted, but is, for example, equal to or more than 10 µm and not more than 400 µm, or preferably equal to or more than 20 µm and not more than 300 µm.

As the separator 70, it is possible to use, for example, a porous sheet (film) configured with a resin, such as polyethylene (PE), polypropylene (PP), polyester, cellulose, and polyamide. The porous sheet described above may have a single layer structure, or may have two or more layers laminate structure (for example, a three layers structure in which PP layers are laminated on both surfaces of a PE layer). On a surface of the separator 70, a heat resistance layer (HRL) may be provided which contains a ceramic particle, or the like.

A thickness of the separator 70 is not particularly restricted, but is, for example, equal to or more than 5 µm and not more than 50 µm, or preferably equal to or more than 10 µm and not more than 30 µm. An air permeability of the separator 70 obtained by Gurley test is not particularly restricted, but is preferably equal to or less than 350 seconds/100cc.

The nonaqueous electrolytic solution 80 contains, for example, a nonaqueous solvent and a supporting salt. The nonaqueous solvent may include various organic solvents, such as carbonates, ethers, esters, nitriles, sulfones, and lactones that are used for this kind of purpose. Among them, the carbonates can be preferably used. The carbonates may include ethylene carbonate (EC), propylene carbonate (PC), diethyl carbonate (DEC), dimethyl carbonate (DMC), ethyl methyl carbonate (EMC), fluoroethylene carbonate (FEC) (preferably, monofluoroethylene carbonate), monofluoromethyl difluoromethyl carbonate (F-DMC), trifluoro dimethyl carbonate (TFDMC), and/or the like. As the nonaqueous solvent, one kind of the nonaqueous solvents may be used alone, or two or more kinds of the nonaqueous solvents may be mixed so as to be used. The supporting salt may include a lithium salt, such as LiPF₆, LiBF₄, and LiClO₄. A concentration of the supporting salt may be 0.7 mol/L to 1.4 mol/L. The nonaqueous electrolytic solution 80 may contain an additive agent that is used for this kind of purpose, as needed. As the additive agent, it may contain, for example, a coating layer forming agent, such as LiB(C₂O₄)₂ (LiBOB) and LiBF₂(C₂O₄); a gas generating agent, such as biphenyl (BP) and cyclohexyl benzene (CHB); a thickening agent, or the like.

The electricity storage device 100 can be used for various purposes. Examples of a suitable purposes, it may be used for an automotive application, in particular, a driving power supply that is mounted on a vehicle, such as battery electric vehicle (BEV), hybrid electric vehicle (HEV), and plug-in hybrid electric vehicle (PHEV). In addition, the electricity storage device 100 can be used as a storage battery, such as small electric power storage device. The electricity storage device 100 can be used, typically, in a form of a battery module configured by connecting plural ones in series/parallel.

Below, a manufacturing method of the electricity storage device 100 will be described. An example of the manufacturing method of the electricity storage device 100 contains an electrode preparing step, an electrode assembly preparing step, an assembling step, an accommodating step, a liquid injecting step, and a sealing step.

At the electrode preparing step, the positive electrode 50 and the negative electrode 60 are prepared.

In order to manufacture the positive electrode 50, a positive electrode slurry and the positive electrode current collector 52 are prepared. In the present embodiment, the positive electrode slurry is prepared by mixing N-methyl-2-pyrrolidone (NMP), the first positive electrode active material particle 56, the second positive electrode active material particle 58, the electrically conducting material, and the binder. Particular configurations (a crystal structure, a composition, a shape, a mean particle diameter, a mass ratio, or the like) of the first positive electrode active material particle 56 and the second positive electrode active material particle 58 may conform to the above-described contents. The positive electrode slurry is applied to coat a surface of the positive electrode current collector 52, and then it is dried and pressed to have a desired thickness, as needed, so as to manufacture the positive electrode 50.

In order to manufacture the negative electrode 60, a negative electrode slurry and the negative electrode current collector 62 are prepared. In the present embodiment, the negative electrode slurry is prepared by mixing water, the graphite-based negative electrode active material particle 66, the binder, and the thickening agent. Particular configurations (particle diameters d10, d50, and d90 based on a mean circularity, an orientation degree, and a particle size distribution) of the graphite-based negative electrode active material particle 66 prepared at that time may conform to the above-described content. **In** the present embodiment, the negative electrode slurry contains the graphite-based negative electrode active material particle 66 whose the mean circularity is equal to or more than 0.8, whose d90/d10 is equal to or more than 5, and whose d90/d50 is equal to or less than 2. The negative electrode slurry is applied to coat the surface of the negative electrode current collector 62, and then it is dried and pressed to have a desired thickness, as needed, so as to manufacture the negative electrode 60. Incidentally, at the electrode preparing step, it is good that an applying and coating method, a drying method, and a pressing method conform to conventionally known methods, and are not particularly restricted.

At the electrode assembly preparing step, a laminate body is manufactured to make the separator 70, the negative electrode 60, the separator 70, and the positive electrode 50 be arranged in this order from bottom to top. This laminate body is wound toward the longitudinal direction to make the positive electrode 50 be positioned at an inner side, so as to manufacture a wound body. Then, the wound body is pressed to form a flattened shape, thereby enabling the manufacture of the wound electrode assembly 20.

At the assembling step, the positive electrode current collection plate 42a and the negative electrode current collection plate 44a are attached to the electrode assembly 20. Next, the positive electrode current collection plate 42a is joined to the positive electrode terminal 42 onto which the sealing body 34 is attached, and the negative electrode current collection plate 44a is joined to the negative electrode terminal 44 which is attached onto the sealing body 34. By doing this, the assembly is constructed, which includes the sealing body 34, the electrode assembly 20, the positive electrode terminal 42, the positive electrode current collection plate 42a, the negative electrode terminal 44, and the negative electrode current collection plate 44a. A method for attaching each of members may be according to a well-known method such as a caulking process, a laser welding, an ultrasonic welding, a resistance welding, or the like.

At the accommodating step, the electrode assembly 20 is accommodated at the inside of the case main body 32. The above constructed assembly is accommodated in the case main body 32, and then the sealing body 34 is stacked on an opening part of the case main body 32.

At the sealing step, a portion where the sealing body 34 and the case main body 32 are stacked one on another is welded, so as to seal the case main body 32. It is good that the welding method conforms to a conventionally known method, and thus it may be, for example, welded by the laser welding.

At the liquid injecting step, from the injection port provided on the case 30, the nonaqueous electrolyte is injected according to a conventionally known method. Incidentally, depending on a type of the electricity storage device, the liquid injecting step may be omitted.

After that, for example, an initial electrical charge, an aging process, or the like, are performed under a predetermined condition, so as to manufacture the electricity storage device 100 being in an available state.

Above, some embodiments of the present technique have been explained, but the above-described embodiments are merely examples. The present technique can be performed in other various forms. The present technique can be executed based on the contents disclosed in the present description, and the technical common sense in the present field. The technique recited in the appended claims includes variously deformed or changed versions of the embodiments that have been illustrated above. For example, one part of the above-described embodiment can be replaced with another deformed aspect, and furthermore another deformed aspect can be added to the above-described embodiment. In addition, unless a technical feature is explained to be essential, this technical feature can be appropriately deleted.

In the above-described embodiments, the electrode assembly 20 has been a wound electrode assembly, but it is not restricted to this. The electrode assembly may be a laminate type electrode assembly in which plural electrode sheets are alternately laminated.

In the above-described embodiments, the crystal structure of the first positive electrode active material particle 56 and the crystal structure of the second positive electrode active material particle 58 have been different from each other, and thus the ununiformity of the movement amount of the lithium ion has been generated. However, the first positive electrode active material and the second positive electrode active material may have the same type of crystal structure. In this situation, for example, the first positive electrode active material and the second positive electrode active material are configured with different compositions from each other. Accordingly, the ununiformity of the movement amount of the lithium ion is generated. Therefore, even in the situation as described above, by combining the configurations of the herein disclosed negative electrode 60, it is possible to suppress the heat generation caused at the short circuit time.

Below, a test example relating to the herein disclosed technique would be explained. The technique disclosed herein is not to be restricted by the below described test example.

Regarding Examples 1 to 14, a different test cell was manufactured for each example, and a maximum temperature of a nail penetration test was measured. In the nail penetration test, the test cell was made to be under a full electrical charge state (at an end-of-charge voltage), a nail whose diameter was 1.0 mm was driven into the test cell at a predetermined speed, and the maximum temperature of the test cell was measured. Below, various materials and the test cell, which were used for the test, will be described.

### [Preparation of negative electrode active material]

As the negative electrode active material, an artificial graphite particle was prepared. A parameter of the artificial graphite particle having been used for each example is shown in Table 1 (in detail, Table 1-2) described later.

### [Measurement of mean circularity]

The mean circularity of the artificial graphite particle was obtained with a commercially available automated static image analysis device ("Morphologi G3/G3SE" made by Malvern Panalytical) by doing as described below. At first, the artificial graphite particle was dispersedly arranged on a base material in order to avoid aggregation, then an optical microscope was used, and thus a particle projected image of it was obtained. This was converted with software provided with the device into digital data, so that the circularities of 1000 or more particles were calculated. Further, the mean value was furthermore calculated, so that the mean circularity was obtained.

### [Measurement of orientation degree]

By the wide angle X-ray diffraction method (XRD), the peak strength I₍₁₁₀₎ corresponding to the (110) lattice plane and the peak strength I₍₀₀₄₎ corresponding to the (004) lattice plane of the X-ray diffraction spectrum of the artificial graphite particle were obtained. Then, the orientation degree (I₍₀₀₄₎/I₍₁₁₀₎) of the artificial graphite particle was calculated.

### [Measurement of d10, d50, d90]

With a commercially available laser diffraction/scattering particle size distribution measuring device, the particle size distribution on the volume basis of the artificial graphite particle was obtained. Regarding the particle size distribution described above, the particle diameter whose cumulative frequency from a small particle side was 10% was treated as d10, the particle diameter whose cumulative frequency was 50% was treated as d50, and the particle diameter whose cumulative frequency was 90% was treated as d90.

### [Preparation of positive electrode active material]

As the positive electrode active material, LiNi_{0.6}Co_{0.2}Mn_{0.2}O₂ (NCM) and the LiFePO₄ (LFP) were prepared. As the NCM, 2 kinds were prepared, which were an aggregated particle whose mean particle diameter was 17 µm and a single crystal particle whose mean particle diameter was 4 µm. As the LFP, 5 kinds were prepared, whose mean particle diameters were within a range of being 0.1 µm to 5 µm. Incidentally, the mean particle diameter of the positive electrode active material was set to be a particle diameter whose cumulative frequency from the small particle side was 50% (a median diameter) with respect to the particle size distribution on the volume basis obtained by the commercially available laser diffraction/scattering particle size distribution measuring device.

### [Manufacture of test cell]

The NCM and the LFP as the positive electrode active material, the acetylene black (AB) as the electrically conducting material, and the polyvinylidene fluoride (PVdF) as the binder were prepared. These were mixed with N-methyl-2-pyrrolidone (NMP) at a mass ratio of being (NCM + LFP) : AB : PVdF = 92 : 5 : 3, so that the positive electrode slurry was manufactured. A mix rate (a mass ratio) of the NCM and the LFP for each example is shown in Table 1 (in detail, Table 1-1). The positive electrode slurry was applied to coat both surfaces of the sheet-shaped aluminum foil whose thickness was 15 µm, dried, and then pressed to have a predetermined thickness. This was processed to have a predetermined size, so that the positive electrode sheet was manufactured.

The artificial graphite particle as the negative electrode active material, the styrene butadiene rubber (SBR) as the binder, and the carboxymethyl cellulose (CMC) as the thickening agent were prepared. These were mixed with an ion exchange water at the mass ratio being artificial graphite particle / SBR / CMC = 99 : 0.5 : 0.5, so that the negative electrode slurry was manufactured. The negative electrode slurry was applied to coat both surfaces of the sheet-shaped copper foil whose thickness was 10 µm, dried, and then pressed to have a predetermined thickness. This was processed to have a predetermined size, so that the negative electrode sheet was manufactured.

As the separator, a porous polyolefin sheet (whose thickness was 20 µm) having the three-layer structure of the PP/PE/PP was prepared. The above manufactured positive electrode sheet, the negative electrode sheet, and two separator sheets prepared above were laminated, and then wound, so that the electrode assembly was manufactured. After that, the terminal was attached to the electrode assembly.

The electrode assembly was inserted into an outer case being an aluminum laminate sheet, the nonaqueous electrolytic solution was injected, and an opening of the outer case was sealed, so that the test cell was manufactured. A composition (a volume ratio) of the nonaqueous electrolytic solution was set to be EC / DMC / EMC = 30 : 30 : 40. Into the nonaqueous electrolytic solution, the LiPF₆ was dissolved as the supporting salt to make a concentration be 1 mol/L.

The above manufactured test cell was kept in a thermostatic chamber being at 25°C. A constant-current/constant-voltage electrical charge was performed on the test cell by 0.3 C current value till SOC 100% (4.40 V). Then, a constant current electrical discharge was performed by 0.3 C current value till 3.00V. Then, 0.5 C constant-current/constant-voltage electrical charge was performed on the test cell till SOC 100% (4.40 V), so that the nail penetration test was performed.

### [Table 1-1]

**Table 1-1**

| | Positive electrode active material | | |
|---|---|---|---|
| | NCM:LFP (mass ratio) | LFP particle diameter (µm) | NCM shape |
| Example 1 | 99:1 | 5 | Aggregated particle |
| Example 2 | 97:3 | 5 | Aggregated particle |
| Example 3 | 97:3 | 1 | Aggregated particle |
| Example 4 | 97:3 | 5 | Aggregated particle |
| Example 5 | 97:3 | 5 | Aggregated particle |
| Example 6 | 97:3 | 5 | Single crystal particle |
| Example 7 | 97:3 | 2 | Single crystal particle |
| Example 8 | 97:3 | 1 | Single crystal particle |
| Example 9 | 97:3 | 0.5 | Single crystal particle |
| Example 10 | 97:3 | 0.1 | Single crystal particle |
| Example 11 | 99.5:0.5 | 5 | Aggregated particle |
| Example 12 | 95:5 | 5 | Aggregated particle |
| Example 13 | 97:3 | 5 | Aggregated particle |
| Example 14 | 97:3 | 5 | Aggregated particle |

### [Table 1-2]

**Table 1-2**

| | Negative electrode active material | | | | | | | | Maximum temperature of nail penetration test (°C) |
|---|---|---|---|---|---|---|---|---|---|
| | Mean circularity | **Orientation** degree (I₍₀₀₄₎/I₍₁₁₀₎) | d10 (µm) | d50 (µm) | d90 (µm) | d50/d10 | d90/d10 | d90/d50 | |
| Example 1 | 0.85 | 4.0 | 5 | 14 | 27 | 2.8 | 5.4 | 1.93 | 90 |
| Example 2 | 0.85 | 4.0 | 5 | 14 | 27 | 2.8 | 5.4 | 1.93 | 85 |
| Example 3 | 0.85 | 4.0 | 5 | 14 | 27 | 2.8 | 5.4 | 1.93 | 71 |
| Example 4 | 0.80 | 5.5 | 6 | 18 | 33 | 3 | 5.5 | 1.83 | 87 |
| Example 5 | 0.90 | 3.6 | 4 | 12 | 22 | 3 | 5.5 | 1.83 | 82 |
| Example 6 | 0.85 | 4.0 | 5 | 14 | 27 | 2.8 | 5.4 | 1.93 | 70 |
| Example 7 | 0.85 | 4.0 | 5 | 14 | 27 | 2.8 | 5.4 | 1.93 | 60 |
| Example 8 | 0.85 | 4.0 | 5 | 14 | 27 | 2.8 | 5.4 | 1.93 | 50 |
| Example 9 | 0.85 | 4.0 | 5 | 14 | 27 | 2.8 | 5.4 | 1.93 | 50 |
| Example 10 | 0.85 | 4.0 | 5 | 14 | 27 | 2.8 | 5.4 | 1.93 | 70 |
| Example 11 | 0.80 | 4.0 | 5 | 14 | 27 | 2.8 | 5.4 | 1.93 | 100 |
| Example 12 | 0.80 | 4.0 | 5 | 14 | 27 | 2.8 | 5.4 | 1.93 | 85 |
| Example 13 | 0.68 | 6.5 | 10 | 18 | 30 | 1.8 | 3 | 1.67 | 110 |
| Example 14 | 0.70 | 6.2 | 10 | 15 | 32 | 1.5 | 3.2 | 2.13 | 108 |

As shown in Table 1-1 and 1-2, regarding Examples 1 to 12, the maximum temperature of the nail penetration test was lower than Examples 13, 14. Regarding all of the artificial graphite particles used for Example 1 to 12, the d90/d10 is equal to or more than 5, and the d90/d50 is equal to or less than 2. In addition, regarding all of the artificial graphite particles used for Example 1 to 12, the mean circularity is equal to or more than 0.8. Based on this result, it can be understood that, according to the herein disclosed electricity storage device, the heat generation caused at the short circuit time can be suppressed. In addition, for example, based on the results of Examples 2, 4, 5, 13, and 14, it can be understood that, as the mean circularity of the negative electrode active material is higher, the heat generation caused at the short circuit time can be suppressed.

As described above, particular aspects of the technique disclosed herein include the following items.
Item 1: An electricity storage device, comprising:
   an electrode assembly that comprises a positive electrode and a negative electrode, wherein
   the negative electrode comprises a negative electrode composite material layer that comprises a graphite-based negative electrode active material particle,
   a mean circularity of the graphite-based negative electrode active material particle is equal to or more than 0.8, and
   with respect to a particle size distribution on a volume basis of the graphite-based negative electrode active material particle that is obtained by a laser diffraction scattering method, all of following conditions are satisfied when a particle diameter whose cumulative frequency from a small particle side is 10% is treated as d10, a particle diameter whose cumulative frequency is 50% is treated as d50, and a particle diameter whose cumulative frequency is 90% is treated as d90:
      (1) d90/d10 is equal to or more than 5; and
      (2) d90/d50 is equal to or less than 2.
Item 2: The electricity storage device recited in Item 1, wherein
   an orientation degree of the graphite-based negative electrode active material particle, which is represented by a ratio I₍₀₀₄₎/I₍₁₁₀₎ of a peak strength I₍₀₀₄₎ of a (004) lattice plane with respect to a peak strength I₍₁₁₀₎ of a (110) lattice plane on an X-ray diffraction spectrum, is equal to or less than 4.5.
Item 3: The electricity storage device recited in Item 1 or 2, wherein
   a mean circularity of the graphite-based negative electrode active material particle is equal to or more than 0.85.
Item 4: The electricity storage device recited in any one of Items 1 to 3, wherein
   the positive electrode comprises a first positive electrode active material particle that has a layered rock salt structure, and comprises a second positive electrode active material particle that has an olivine structure.
Item 5: The electricity storage device recited in Item 4, wherein
   the first positive electrode active material particle comprises a lithium nickel cobalt manganese composite oxide, and
   the second positive electrode active material particle comprises a lithium iron phosphate.
Item 6: The electricity storage device recited in Item 4 or 5, wherein
   a mass ratio of the first positive electrode active material particle and the second positive electrode active material particle is 99.5 : 0.5 to 95 : 5.
Item 7: The electricity storage device recited in any one of Items 4 to 6, wherein
   with respect to a particle size distribution on a volume basis of the second positive electrode active material particle obtained by the laser diffraction scattering method, a particle diameter whose cumulative frequency from a small particle side is 50% is equal to or more than 0.5 µm and not more than 2 µm.
Item 8: The electricity storage device recited in any one of Items 4 to 7, wherein
   the first positive electrode active material particle is a single crystal particle.
Item 9: A manufacturing method of an electricity storage device comprising an electrode assembly that comprises a positive electrode and a negative electrode, the manufacturing method comprising:
   preparing a negative electrode slurry that comprises a graphite-based negative electrode active material particle; and
   applying the negative electrode slurry to coat a negative electrode current collector, wherein
   a mean circularity of the graphite-based negative electrode active material particle is equal to or more than 0.8, and
   with respect to a particle size distribution on a volume basis of the graphite-based negative electrode active material particle that is obtained by a laser diffraction scattering method, all of following conditions are satisfied when a particle diameter whose cumulative frequency from a small particle side is 10% is treated as d10, a particle diameter whose cumulative frequency is 50% is treated as d50, and a particle diameter whose cumulative frequency is 90% is treated as d90:
      (1) d90/d10 is equal to or more than 5; and
      (2) d90/d50 is equal to or less than 2.
Item 10: The manufacturing method according to Item 9, wherein
   an orientation degree of the graphite-based negative electrode active material particle, which is represented by a ratio I₍₀₀₄₎/I₍₁₁₀₎ of a peak strength I₍₀₀₄₎ of a (004) lattice plane with respect to a peak strength I₍₁₁₀₎ of a (110) lattice plane on an X-ray diffraction spectrum, is equal to or less than 4.5.
Item 11: The manufacturing method according to Item 9 or 10, wherein
   the mean circularity of the graphite-based negative electrode active material particle is equal to or more than 0.85.
Item 12: The manufacturing method according to any one of Items 9 to 11, wherein
   the positive electrode comprises
   a first positive electrode active material particle having a layered rock salt structure and
   a second positive electrode active material particle having an olivine structure.
Item 13 The manufacturing method according to Item 12, wherein
   the first positive electrode active material particle comprises a lithium nickel cobalt manganese composite oxide, and
   the second positive electrode active material particle comprises a lithium iron phosphate.
Item 14: The manufacturing method according to Item 12 or 13, wherein
   a mass ratio of the first positive electrode active material particle and the second positive electrode active material particle is 99.5 : 0.5 to 95 : 5.
Item 15: The manufacturing method according to any one of Items 12 to 14, wherein
   with respect to a particle size distribution on a volume basis of the second positive electrode active material particle obtained by the laser diffraction scattering method, a particle diameter whose cumulative frequency from a small particle side is 50% is equal to or more than 0.5 µm and not more than 2 µm.
Item 16: The manufacturing method according to any one of Items 12 to 15, wherein the first positive electrode active material particle is a single crystal particle.

## Claims

1. An electricity storage device (100), comprising:
an electrode assembly (20) that comprises a positive electrode (50) and a negative electrode (60), wherein
the negative electrode (60) comprises a negative electrode composite material layer (64) comprising a graphite-based negative electrode active material particle (66),
a mean circularity of the graphite-based negative electrode active material particle (66) is equal to or more than 0.8, and
with respect to a particle size distribution on a volume basis of the graphite-based negative electrode active material particle (66) that is obtained by a laser diffraction scattering method, all of following conditions are satisfied when a particle diameter whose cumulative frequency from a small particle side is 10% is treated as d10, a particle diameter whose cumulative frequency is 50% is treated as d50, and a particle diameter whose cumulative frequency is 90% is treated as d90:
(1) d90/d10 is equal to or more than 5; and
(2) d90/d50 is equal to or less than 2.

2. The electricity storage device (100) according to claim 1, wherein
an orientation degree of the graphite-based negative electrode active material particle (66), which is represented by a ratio I₍₀₀₄₎/I₍₁₁₀₎ of a peak strength I₍₀₀₄₎ of a (004) lattice plane with respect to a peak strength I₍₁₁₀₎ of a (110) lattice plane on an X-ray diffraction spectrum, is equal to or less than 4.5.

3. The electricity storage device (100) according to claim 1 or 2, wherein
the mean circularity of the graphite-based negative electrode active material particle (66) is equal to or more than 0.85.

4. The electricity storage device (100) according to any one of claims 1 to 3, wherein
the positive electrode (50) comprises
a first positive electrode active material particle (56) having a layered rock salt structure and
a second positive electrode active material particle (58) having an olivine structure.

5. The electricity storage device (100) according to claim 4, wherein
the first positive electrode active material particle (56) comprises a lithium nickel cobalt manganese composite oxide, and
the second positive electrode active material particle (58) comprises a lithium iron phosphate.

6. The electricity storage device (100) according to claim 4 or 5, wherein
a mass ratio of the first positive electrode active material particle (56) and the second positive electrode active material particle (58) is 99.5 : 0.5 to 95 : 5.

7. The electricity storage device (100) according to claims 4 to 6, wherein
with respect to a particle size distribution on a volume basis of the second positive electrode active material particle (58) obtained by the laser diffraction scattering method, a particle diameter whose cumulative frequency from a small particle side is 50% is equal to or more than 0.5 µm and not more than 2 µm.

8. The electricity storage device (100) according to claims 4 to 7, wherein
the first positive electrode active material particle (56) is a single crystal particle.

9. A manufacturing method of an electricity storage device (100) comprising an electrode assembly (20) that comprises a positive electrode (50) and a negative electrode (60), the manufacturing method comprising:
preparing a negative electrode (60) slurry that comprises a graphite-based negative electrode active material particle (66); and
applying the negative electrode (60) slurry to coat a negative electrode (60) current collector, wherein
a mean circularity of the graphite-based negative electrode active material particle (66) is equal to or more than 0.8, and
with respect to a particle size distribution on a volume basis of the graphite-based negative electrode active material particle (66) that is obtained by a laser diffraction scattering method, all of following conditions are satisfied when a particle diameter whose cumulative frequency from a small particle side is 10% is treated as d10, a particle diameter whose cumulative frequency is 50% is treated as d50, and a particle diameter whose cumulative frequency is 90% is treated as d90:
(1) d90/d10 is equal to or more than 5; and
(2) d90/d50 is equal to or less than 2.

10. The manufacturing according to claim 9, wherein
an orientation degree of the graphite-based negative electrode active material particle (66), which is represented by a ratio I₍₀₀₄₎/I₍₁₁₀₎ of a peak strength I₍₀₀₄₎ of a (004) lattice plane with respect to a peak strength I₍₁₁₀₎ of a (110) lattice plane on an X-ray diffraction spectrum, is equal to or less than 4.5.

11. The manufacturing method according to claim 9 or 10, wherein
the mean circularity of the graphite-based negative electrode active material particle (66) is equal to or more than 0.85.

12. The manufacturing method according to any one of claims 9 to 11, wherein
the positive electrode (50) comprises
a first positive electrode active material particle (56) having a layered rock salt structure and
a second positive electrode active material particle (58) having an olivine structure.

13. The manufacturing method according to claim 12, wherein
the first positive electrode active material particle (56) comprises a lithium nickel cobalt manganese composite oxide, and
the second positive electrode active material particle (58) comprises a lithium iron phosphate.

14. The manufacturing method according to claim 12 or 13, wherein
a mass ratio of the first positive electrode active material particle (56) and the second positive electrode active material particle (58) is 99.5 : 0.5 to 95 : 5.

15. The manufacturing method according to claims 12 to 14, wherein
with respect to a particle size distribution on a volume basis of the second positive electrode active material particle (58) obtained by the laser diffraction scattering method, a particle diameter whose cumulative frequency from a small particle side is 50% is equal to or more than 0.5 µm and not more than 2 µm.
